# EUROPEAN PATENT APPLICATION

(11) **EP 3 181 815 A1**
(43) Date of publication of application: **21.06.2017**
(21) Application number: 16198359.8
(22) Date of filing: 11.11.2016
(51) Int. Cl.: F01D 5/18, F01D 9/06, F23R 3/00

(54) **ENGINE COMPONENT FOR A GAS TURBINE ENGINE**

(30) Priority: 24.11.2015 US 201514950627
(71) Applicant: General Electric Company, Schenectady, NY 12345 (US)
(72) Inventor: BUNKER, Ronald Scott, West Chester, OH 45069 (US)
(74) Representative: Williams, Andrew Richard

(57) **Abstract**

An engine component 120 for a gas turbine engine 10 can generate a hot combustion gas flow H and provide a cooling fluid flow C. A wall 122 can separate the hot combustion gas flow H from the cooling fluid flow C. Multiple film holes 130 can be disposed in the wall 122, having an inlet 132 adjacent the cooling fluid flow C and an outlet 134 at the hot combustion gas flow H such that the cooling fluid flow C can be provided to the hot combustion gas flow H. The film holes 130 further comprise inlets 132, such that the inlets 132 can be arranged with the inlets 132 having at least one of a different orientation relative to one another or are non-aligned with each other.

## Description

### BACKGROUND OF THE INVENTION

Turbine engines, and particularly gas or combustion turbine engines, are rotary engines that extract energy from a flow of combusted gases passing through the engine onto a multitude of turbine blades. Gas turbine engines have been used for land and nautical locomotion and power generation, but are most commonly used for aeronautical applications such as for aircraft, including helicopters. In aircraft, gas turbine engines are used for propulsion of the aircraft. In terrestrial applications, turbine engines are often used for power generation.

Gas turbine engines for aircraft are designed to operate at high temperatures to maximize engine efficiency, so cooling of certain engine components, such as the high pressure turbine and the low pressure turbine, can be necessary. Typically, cooling is accomplished by ducting cooler air from the high and/or low pressure compressors to the engine components which require cooling. Temperatures in the high pressure turbine are around 1000 °C to 2000 °C and the cooling air from the compressor is around 500 °C to 700 °C. While the compressor air is a high temperature, it is cooler relative to the turbine air, and can be used to cool the turbine.

Typical film cooling comprises film hole inlet placements which are presently uncontrolled, or non-optimized. Thus, film effectiveness is often based upon arbitrary placements of inlets relative to one another or additional internal features, which do not sufficiently optimize the cooling air to cool necessary engine components.

### BRIEF DESCRIPTION OF THE INVENTION

In one aspect, an engine component for a gas turbine engine, which generates a hot combustion gas flow, and provides a cooling fluid flow, comprising a wall separating the hot combustion gas flow from the cooling fluid flow, having a hot surface along with the hot combustion gas flows in a hot flow path and a cooling surface facing the cooling air flow. The engine component further comprises multiple film holes in a predetermined arrangement along the hot flow path, with each film hole having an inlet provided on the cooling surface, an outlet provided on the hot surface, and a passage connecting the inlet and the outlet. At least two adjacent inlets along the cooling surface have at least one of a different orientation relative to the cooling fluid flow or are non-aligned with each other.

In another aspect, an engine component for a gas turbine engine, which generates a hot combustion gas flow, and provides a cooling fluid flow, comprising a wall separating the hot combustion gas flow from the cooling fluid flow and having a hot surface along with the hot combustion gas flows in a hot flow path, and a cooling surface facing the cooling air flow. At least two adjacent film holes inlets arranged along the cooling surface and having at least one of a different orientation relative to the cooling fluid flow or are non-aligned with each other.

### BRIEF DESCRIPTION OF THE DRAWINGS

In the drawings:
FIG. 1 is a schematic, sectional view of a gas turbine engine.
FIG. 2 is side section view of a combustor of the gas turbine engine of FIG. 1.
FIG. 3 is a perspective view of an engine component in the form of a turbine blade of the engine of FIG. 2 with cooling air inlet passages.
FIG. 4 is a perspective view of a portion of the engine component having a plurality of film holes.
FIG. 5 is a top view illustrating the engine component having arranged film hole inlets.
FIG. 6 is a top view illustrating arranged inlets with angled axes relative to one another.
FIG. 7 is a top view illustrating pairs of angled inlets.
FIG. 8 is a top view of angled inlets comprising different sizes.
FIG. 9 is a top view illustrating a series of angled inlets being angled relative to the next hole in the series.
FIG. 10 is a top view illustrating a series of angled inlets having a slight angular variation between adjacent inlets.
FIG. 11 is a top view illustrating arranged inlets distributed around a turbulator.
FIG. 12 is a top view illustrating arranging inlets about a turbulator.

### DESCRIPTION OF EMBODIMENTS OF THE INVENTION

The described embodiments of the present invention are directed to apparatuses, methods, and other devices related to routing airflow in a turbine engine. For purposes of illustration, the present invention will be described with respect to an aircraft gas turbine engine. It will be understood, however, that the invention is not so limited and can have general applicability in non-aircraft applications, such as other mobile applications and non-mobile industrial, commercial, and residential applications.

It should be further understood that for purposes of illustration, the present invention will be described with respect to an airfoil for a turbine blade of the turbine engine. It will be understood, however, that the invention is not limited to the turbine blade, and can comprise any airfoil structure, such as a compressor blade, a turbine or compressor vane, a fan blade, a strut, a shroud assembly, or a combustor liner or any other engine component requiring cooling in non-limiting examples. Furthermore, as described herein, the internal cooling passages or cooling surface for the engine component can comprise a smooth, turbulated, pin bank, mesh, trailing edge, leading edge, tip, micro-circuit, or endwall in non-limiting examples.

As used herein, the term "forward" or "upstream" refers to moving in a direction toward the engine inlet, or a component being relatively closer to the engine inlet as compared to another component. The term "aft" or "downstream" used in conjunction with "forward" or "upstream" refers to a direction toward the rear or outlet of the engine relative to the engine centerline.

Additionally, as used herein, the terms "radial" or "radially" refer to a dimension extending between a center longitudinal axis of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, upstream, downstream, aft, etc.) are only used for identification purposes to aid the reader's understanding of the present invention, and do not create limitations, particularly as to the position, orientation, or use of the invention. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

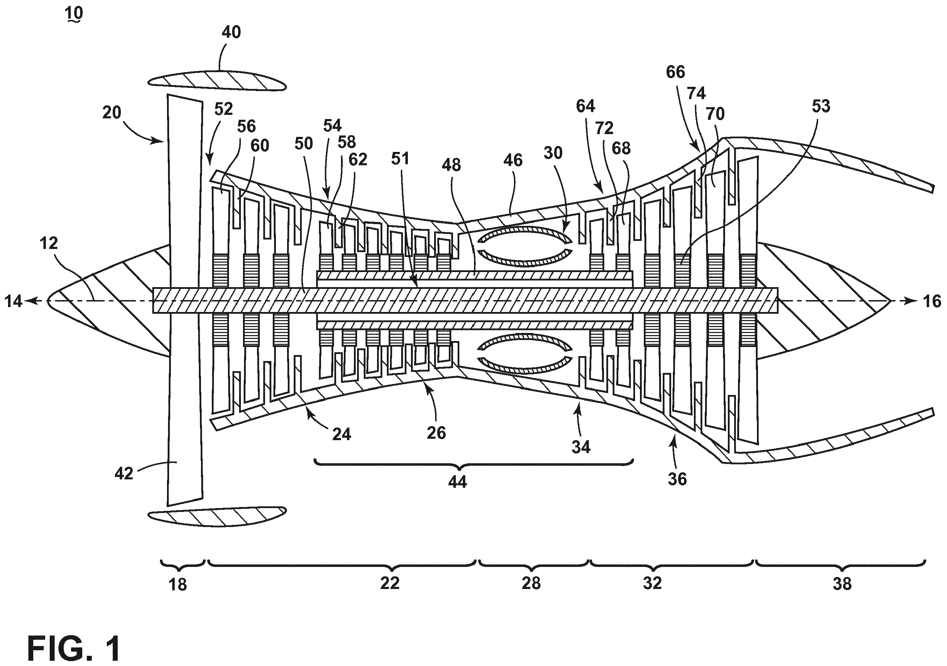

FIG. 1 is a schematic cross-sectional diagram of a gas turbine engine 10 for an aircraft. The engine 10 has a generally longitudinally extending axis or centerline 12 extending forward 14 to aft 16. The engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including a HP turbine 34, and a LP turbine 36, and an exhaust section 38.

The fan section 18 includes a fan casing 40 surrounding the fan 20. The fan 20 includes a plurality of fan blades 42 disposed radially about the centerline 12. The HP compressor 26, the combustor 30, and the HP turbine 34 form a core 44 of the engine 10, which generates combustion gases. The core 44 is surrounded by core casing 46, which can be coupled with the fan casing 40.

A HP shaft or spool 48 disposed coaxially about the centerline 12 of the engine 10 drivingly connects the HP turbine 34 to the HP compressor 26. A LP shaft or spool 50, which is disposed coaxially about the centerline 12 of the engine 10 within the larger diameter annular HP spool 48, drivingly connects the LP turbine 36 to the LP compressor 24 and fan 20. The portions of the engine 10 mounted to and rotating with either or both of the spools 48, 50 are referred to individually or collectively as a rotor 51.

The LP compressor 24 and the HP compressor 26 respectively include a plurality of compressor stages 52, 54, in which a set of compressor blades 58 rotate relative to a corresponding set of static compressor vanes 60, 62 (also called a nozzle) to compress or pressurize the stream of fluid passing through the stage. In a single compressor stage 52, 54, multiple compressor blades 56, 58 can be provided in a ring and can extend radially outwardly relative to the centerline 12, from a blade platform to a blade tip, while the corresponding static compressor vanes 60, 62 are positioned downstream of and adjacent to the rotating blades 56, 58. It is noted that the number of blades, vanes, and compressor stages shown in FIG. 1 were selected for illustrative purposes only, and that other numbers are possible. The blades 56, 58 for a stage of the compressor can be mounted to a disk 53, which is mounted to the corresponding one of the HP and LP spools 48, 50, with each stage having its own disk. The vanes 60, 62 are mounted to the core casing 46 in a circumferential arrangement about the rotor 51.

The HP turbine 34 and the LP turbine 36 respectively include a plurality of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine blades 68, 70 can be provided in a ring and can extend radially outwardly relative to the centerline 12, from a blade platform to a blade tip, while the corresponding static turbine vanes 72, 74 are positioned upstream of and adjacent to the rotating blades 68, 70. It is noted that the number of blades, vanes, and turbine stages shown in FIG. 1 were selected for illustrative purposes only, and that other numbers are possible.

In operation, the rotating fan 20 supplies ambient air to the LP compressor 24, which then supplies pressurized ambient air to the HP compressor 26, which further pressurizes the ambient air. The pressurized air from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the engine 10 via the exhaust section 38. The driving of the LP turbine 36 drives the LP spool 50 to rotate the fan 20 and the LP compressor 24.

Some of the ambient air supplied by the fan 20 can bypass the engine core 44 and be used for cooling of portions, especially hot portions, of the engine 10, and/or used to cool or power other aspects of the aircraft. In the context of a turbine engine, the hot portions of the engine are normally downstream of the combustor 30, especially the turbine section 32, with the HP turbine 34 being the hottest portion as it is directly downstream of the combustion section 28. Other sources of cooling fluid can be, but is not limited to, fluid discharged from the LP compressor 24 or the HP compressor 26.

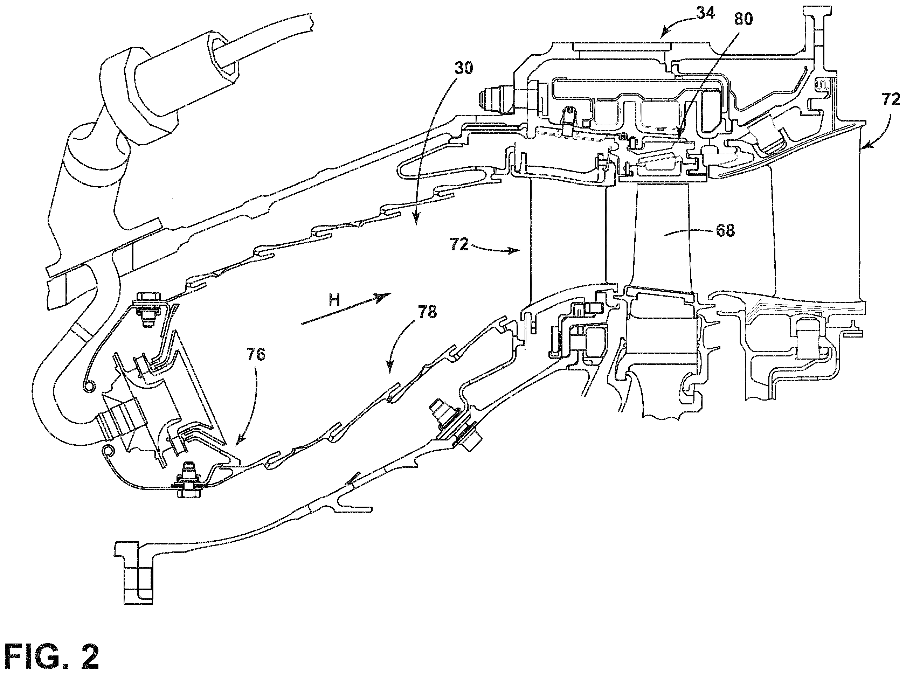

FIG. 2 is a side section view of the combustor 30 and HP turbine 34 of the engine 10 from FIG. 1. The combustor 30 includes a deflector 76 and a combustor liner 78. Adjacent to the turbine blade 68 of the turbine 34 in the axial direction are sets of static turbine vanes 72 forming nozzles. The nozzles turn combustion gas so that the maximum energy can be extracted by the turbine 34. A cooling fluid flow can pass through the vanes 72 to cool the vanes 72 as hot combustion gas H passes along the exterior of the vanes 72 from the combustor 30. A shroud assembly 80 is adjacent to the rotating blade 68 to minimize flow loss in the turbine 34. Similar shroud assemblies can also be associated with the LP turbine 36, the LP compressor 24, or the HP compressor 26.

One or more of the engine components of the engine 10 has a film-cooled wall in which various film hole embodiments disclosed further herein can be utilized. Some non-limiting examples of the engine component having a film-cooled wall can include the blades 68, 70, vanes or nozzles 72, 74, combustor deflector 76, combustor liner 78, or shroud assembly 80, described in FIGS. 1-2. Other non-limiting examples where film cooling is used include turbine transition ducts, struts, and exhaust nozzles.

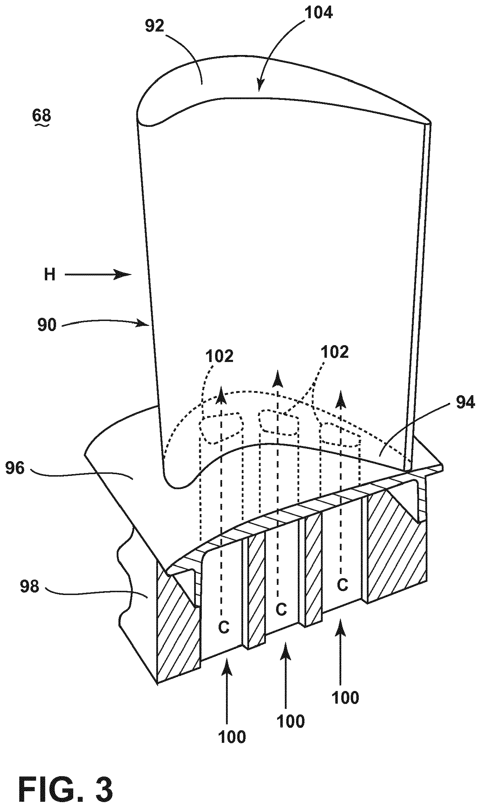

FIG. 3 is a perspective view of an engine component in the form of one of the turbine blades 68 of the engine 10 from FIG. 1. It should be understood that the blade as described herein is exemplary, and the concepts disclosed extend to additional engine components and are not limited to a blade 68. The turbine blade 68 includes a dovetail 98 and an airfoil 90. The airfoil 90 extends from a tip 92 to a root 94 defining a spanwise direction. The dovetail 98 further includes a platform 96 integral with the 90 at the root 94, which helps to radially contain the turbine airflow. The dovetail 98 can be configured to mount to a turbine rotor disk on the engine 10. The dovetail 98 comprises at least one inlet passage, exemplarily shown as three inlet passages 100, each extending through the dovetail 98 to provide internal fluid communication with the airfoil 90 at one or more passage outlets 102. It should be appreciated that the dovetail 98 is shown in cross-section, such that the inlet passages 100 are housed within the body of the dovetail 98.

The airfoil 90 can further define an interior 104, such that a flow of cooling fluid can be provided through the inlet passages 100 and to the interior 104 of the airfoil 90. Thus, a flow of cooling fluid C can be fed through the inlet passages 100, exiting the outlets 102, and passing within the interior 104 of the airfoil. The flow of hot combustion gas H can pass external of the airfoil 90, while the cool airflow C moves within the interior 104.

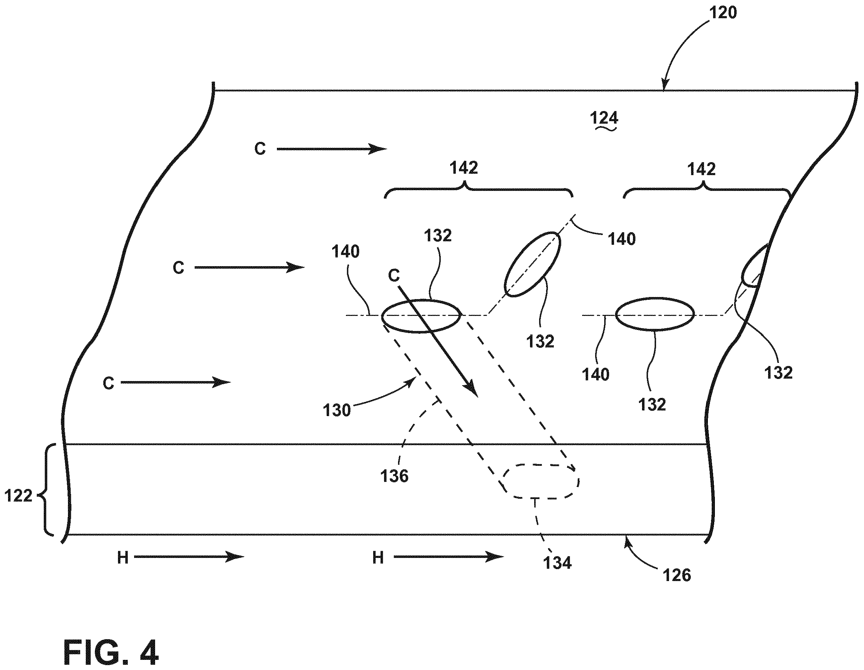

FIG. 4 is a schematic view showing an engine component 120 of the engine 10 from FIG. 1, which can comprise the surface of the airfoil 90 of FIG. 3. The engine component 120 can be disposed in the flow of hot combustion gases represented by arrows H. A cooling fluid flow, represented by arrows C can be supplied to cool the engine component 120. As discussed above with respect to FIGS. 1-2, in the context of a turbine engine, the cooling fluid can be from any source, but is typically from at least one of ambient air supplied by the fan 20 which bypasses the engine core 44, fluid discharged from the LP compressor 24, or fluid discharged from the HP compressor 26.

The engine component 120 includes a wall 122 having a hot surface 126 facing the hot combustion gas H and a cooling surface 124 facing the cooling fluid flow C. In the case of a gas turbine engine, the hot surface 126 can be exposed to gases having temperatures in the range of 1000 °C to 2000 °C. Suitable materials for the wall 122 include, but are not limited to, steel, refractory metals such as titanium, or super alloys based on nickel, cobalt, or iron, and ceramic matrix composites.

The engine component 120 can define the interior 104 of the airfoil 90 of FIG. 3, comprising the cooling surface 124. The hot surface 126 can be an exterior surface of the engine component 120, such as a pressure or suction side of the airfoil 90.

Referring to FIG. 4, the engine component 120 further includes multiple film holes 130 that provide fluid communication between the interior cavity 104 and the hot surface 126 of the engine component 120. During operation, the cooling fluid flow C is supplied to the interior cavity 104 and out of the film holes 130 to create a thin layer or film of cool air on the hot surface 126, protecting it from the hot combustion gas H.

Each film hole 130 can have an inlet 132 provided on the cooling surface 124 of the wall 122, an outlet 134 provided on the hot surface 126, and a passage 136 connecting the inlet 132 and outlet 134. During operation, the cooling fluid flow C enters the film hole 130 through the inlet 132 and passes through the passage 136 before exiting the film hole 130 at the outlet 134 along the hot surface 126.

The passage 136 can define a metering section for metering of the mass flow rate of the cooling fluid flow C. The metering section can be a portion of the passage 136 with the smallest cross-sectional area, and can be a discrete location or an elongated section of the passage 136. The passage 136 can further define a diffusing section in which the cooling fluid flow C can expand to form a wider cooling film. The metering section can be provided at or near the inlet 132, while the diffusion section can be defined at or near the outlet 134.

The film holes 130 can comprise multiple film holes 130 disposed along the wall 122 of the engine component 120. Each film hole inlet 132 can define a major axis 140. The circular shape of the inlet 132 can define an ellipse-shaped outlet, such that the axis can be defined between the vertices of the ellipse. Furthermore, two or more inlets 132 can be grouped or arranged together to define a film hole inlet arrangement 142. As exemplarily shown in FIG. 4, each arrangement 142 comprises at least two inlets 132, each inlet 132 being angularly offset from one another as defined by the major axes 140 of the arranged film hole inlets 132. While the inlet 132 as shown is an elliptical shape, it should be appreciated that the film hole 130 is round and appears elliptical in the perspective view of FIG. 4.

The arrangements 142 can define a pre-determined relationship between at least two adjacent film hole inlets 132. The pre-determined relationship defined by the arrangements 142 can comprise a relative orientation for the inlets 132, being relative to the flow of cooling fluid, another film hole inlet 132, or another arrangements 142 in non-limiting examples. It should be understood that the arrangements 142 can comprise pairs of adjacent inlets 132, multiple pairs of inlets 132, or of variable organizations of film holes 132 into the arrangements. Furthermore, as described herein, the predetermined relationship can be defined by adjacent film holes relative to an axis defined by the inlet, such as a major axis. However, the axes need not be limited to the same angles, relative to one or more of the cooling fluid flow C, an axial direction, a radial direction, the angle of the passage 136, or any combination thereof. Thus, the angles or axes defined by the film holes 130 or the inlets 132 can be in a predetermined relationship to one another, without a limited orientation relative to one another.

It should be further understood that the round shape for the film holes 130 and the ellipse-shaped inlets 132 and outlets 134 are exemplary. Alternative film hole shapes as well as inlet and outlet shapes are contemplated, including but not limited to circle, oval, triangle, square quadrilateral, unique, or otherwise.

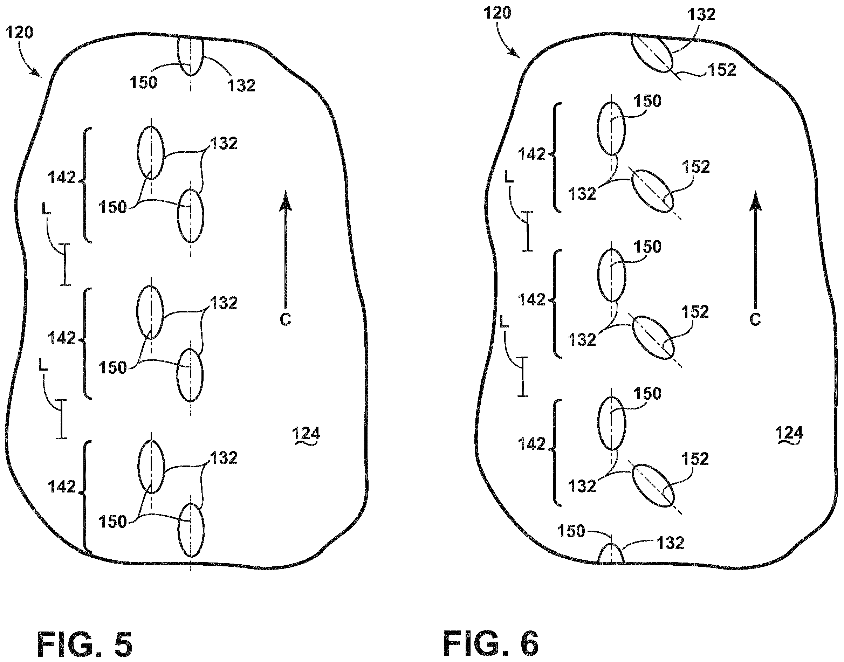

FIGS. 5 - 12 illustrate multiple examples where the arrangements 142 define the predetermined relationships between the inlets 132 or the arrangements thereof. In FIG. 5, a first example of the film hole inlet arrangements 142 is shown. In this embodiment, multiple pairs of inlets 132 define the arrangements 142. The pairs of inlets 132 are arranged such that they have aligned major axes 150. Aligned major axes 150 are major axes that are disposed parallel to the direction of the cooling fluid flow C. The pairs can be spaced from one another by a length L, such that the spacing between the arrangements 142 of the inlets 132 can be defined. It should be appreciated that while the arrangements 142 are described in relation to two inlets 132, arrangements can comprise any number of inlets 132.

Turning now to FIG. 6, a second example of the film hole inlet arrangements 142 is shown, with inlets disposed within the same arrangement 142 having different orientations relative to the cooling fluid flow C. Each arrangement 142 comprises two inlets 132. A first inlets 132 defines an aligned major axis 150, being parallel to the cooling fluid flow C, while the second inlets 132 within the arrangement 142 comprises an angularly offset major axis 152, having an angular disposition from the direction of the cooling fluid flow C such that the angular deviation is at least one-degree. It should be understood, that the offset major axis 152 can define any angle relative to the cooling fluid flow C from 0-degree to 359-degrees, and can be offset from the major axis 150 of the other film hole inlet by greater than 0-degrees, but less than 180-degrees. It should be understood that the axes 150, 152 as shown are only relative to the flow of cooling fluid C along the surface. The film holes 130 can also have centerline axes defining angle relative to the surface, best seen in FIG. 4. Thus, the film holes 130 can define further angles extending into the cooling surface 124 which differ from one another, defining different film hole geometries that do not appear in the tip view of FIG. 6.

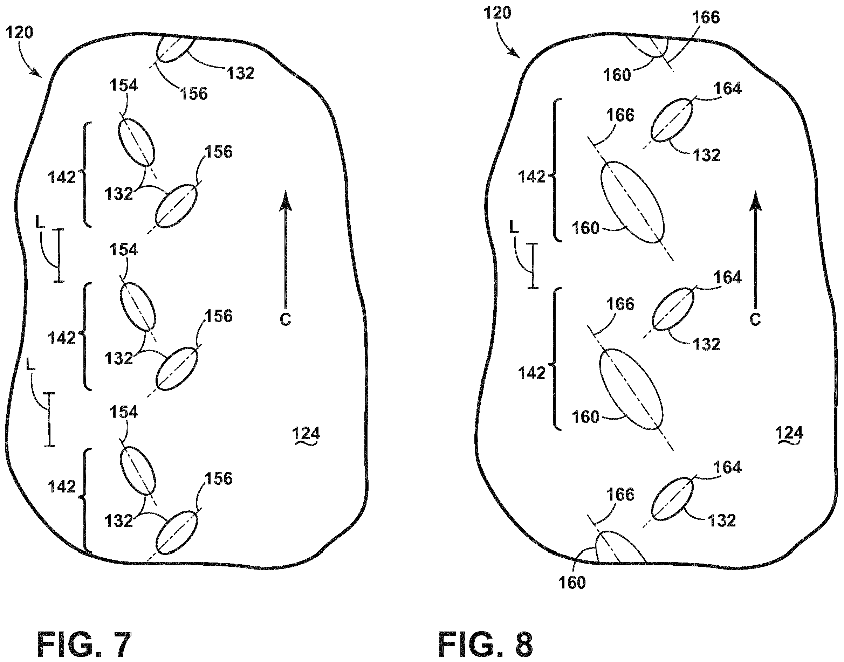

In FIG. 7, a third example of the film hole inlet arrangements 142 is shown, each arrangement comprising two inlets 132 having an angularly offset major axis. One of the inlets 132 defines a first offset axis 154 while a second offset axis 156 is defined by the second inlet 132. In each arrangement 142, both inlets 132 comprise at least one of the first and second offset axes 154, 156 relative to the cooling fluid flow C.

In FIG. 8, a fourth example of the film hole inlet arrangements 142 shows two inlets in each arrangement 142. The arrangement 142 comprises an enlarged film hole inlet 160 and the standard inlets 132, such that the enlarged inlet 160 defines a larger cross-section than the inlets 132. Similar to FIG. 7, both inlets, 160 define offset major axes 164, 166 relative to the direction of the cooling fluid flow C. It should be appreciated that the enlarged film hole inlets 160 can also comprise alternate film hole inlet shapes, which can be utilized with particular film hole inlet shaping.

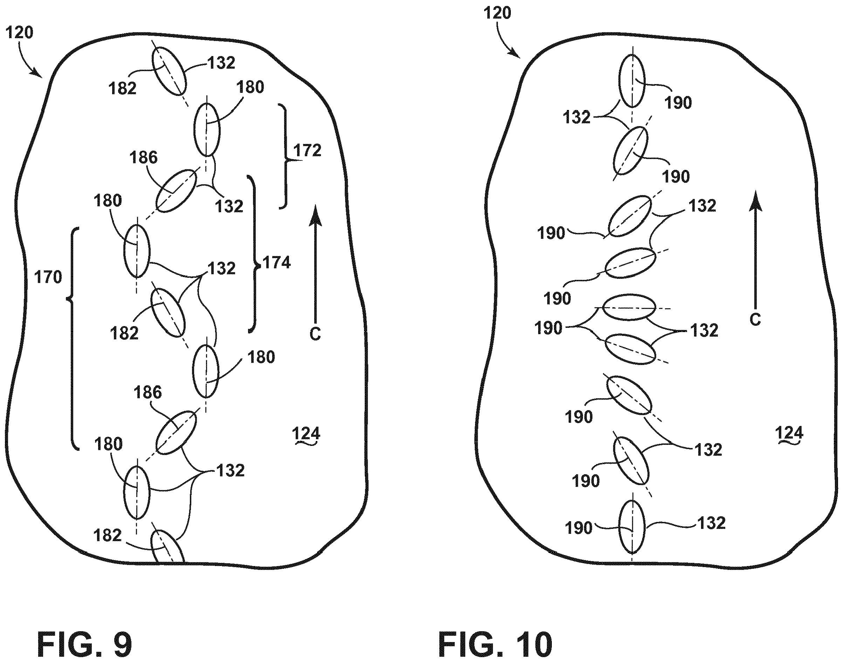

Turning now to FIG. 9, a fifth example illustrates a plurality of inlets 132 being disposed in an arrangement defining a serpentine path along the engine component 120. The inlets 132 can be organized into multiple arrangements. A first arrangement 170 comprises four inlets 132, such that repetition of the arrangement 170 in a linear path defines the serpentine path of the inlets 132. Additional exemplary arrangements include a two-inlet arrangement 172 and three-inlet arrangement 174. The inlets 132 can be angularly offset from the direction of the cooling fluid flow C as defined by their major axes. The angular disposition of the major axes can be arranged relative to adjacent inlets 132 and the major axes of adjacent inlets 132. As shown, a first major axis 180 can be disposed parallel to the direction of the cooling fluid flow C. Adjacent major axes can be offset by 45-degrees. As such, a second major axis 182 can be at a 45-degree angle relative to the direction of the cooling fluid flow C and a third major axis 186 can be at a 135-degree angle relative to the direction of the cooling fluid flow C.

Turning to FIG. 10, a fifth example illustrates a linear set of inlets 132 having slightly varying major axes 190, relative to the direction of the cooling fluid flow C. Each major axis 190 can be rotated slightly, from 4-degrees to 10-degrees, for example, defining a plurality of inlets 132 transitioning from a vertical major axis to a horizontal major axis. The vertical major axis can be parallel to the direction of the cooling fluid flow C while the horizontal major axis can be orthogonal to the vertical major axis and the cooling fluid flow C. It should be understood that each variation from inlet-to-inlet are for successive rotations between adjacent inlets 132 and should not be understood as limiting to what is illustrated in FIG. 10. For example, a row of film hole inlets 132 is contemplated that sweeps from -30-degrees relative to the engine centerline 12, to +30-degrees over the course of its radial extent, or one that sweeps from -10-degrees to +40 with the most axial oriented inlet no longer being in the center of the row.

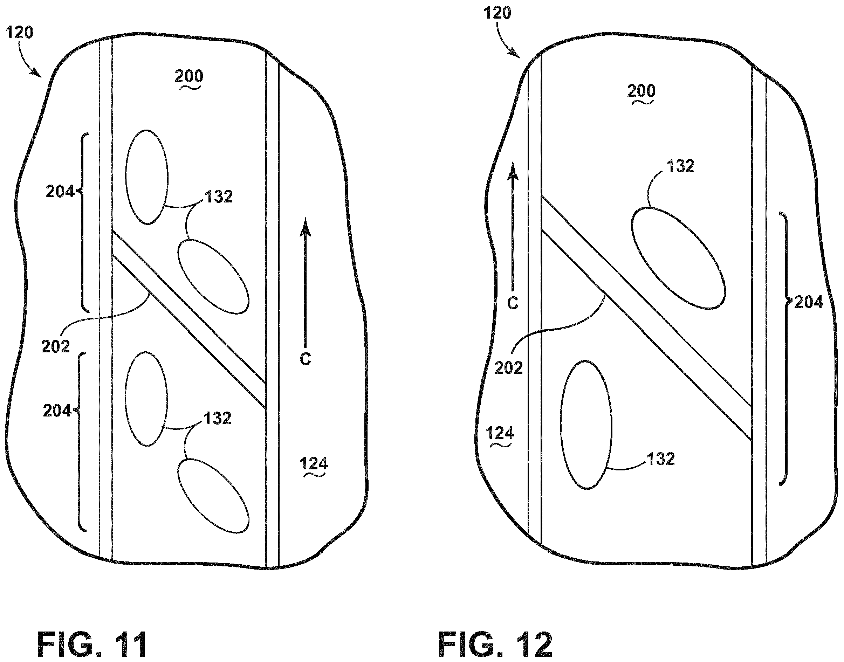

In FIG. 11, a sixth example illustrates arrangements of inlets 132 relative to a turbulator 202. A channel 200 can comprise the cooling surface 124 of the engine component 120. The channel 200 can comprise one or more turbulators 202 disposed therein. A plurality of arrangements 204 of inlets 132 can be disposed about the turbulator 202, being separated by the turbulator 202 in this example. In FIG. 12, a seventh example, similar to FIG. 11, the arrangement 204 of inlets 132 is separated by the turbulator 202 between the inlets 132 of the arrangement.

It should be appreciated in further examples, the turbulator 202 of FIGS. 11 - 12 can be substituted for additional engine component structures, such as pins or pin banks, and can reside within many formats of cooling structures such as a cooling mesh, the leading or trailing edge, end walls, or microcircuits in non-limiting examples. Additionally, the channel 200 can be smooth, having arrangements of inlets 132 disposed in the channel 200.

It should be appreciated that while this description is generally described as having two inlets within each arrangement, any number of inlets can comprise an arrangement. Additionally, one or more inlets within each arrangement can be angularly offset from the direction of the flow of cooling fluid, as defined by the major axes of the inlets. Where inlets have different shapes than the elliptical shapes as illustrated, the major axis can be defined across the greatest cross-sectional distance as defined by the inlet. The angular deviations from the direction of the cooling fluid flow can be defined from 0-degrees to 359-degrees. The inlet arrangements can be multiple, extending along the length of the cooling surface or the engine component. Additionally, the arrangements can be disposed laterally, or a combination of longitudinally and laterally along the length of the engine component, and are not limited to the linear distributions or arrangements as shown. As such, a lateral arrangement or system of arrangements can longitudinally overlap one another along the length of the engine component.

It should be further appreciated as described herein, the arrangements of inlets are groupings of two or more film hole inlets relative to one another. The placement of the inlets should be understood as non-random. The inlets can be adjacent to or arranged relative to one another and can define hole axes relative to one another, with the axis angles being between 0-degrees and 180-degrees relative to one another. The inlets within the groups can be staggered by a hole-to-hole distance or can be staggered by a group-to-group distance, or by arrangement. The inlets can comprise arrangements having inlets with differing sizes. The film hole, inlet, outlet, or passage therethrough can be used to define the film hole size. The arrangements can further be utilized with inlet or exit hole shaping, such that inlets or outlets within arrangements comprise hole shaping relative to one another.

It should be further appreciated that two arranged inlets can have differing outlets or passages comprising the film holes. As such, similarly oriented inlets can have differently oriented outlets or film hole passages, such that the film cooling can be optimized through the placement and orientation of the inlets.

It should be further appreciated that arrangement of inlets or placement of inlets relative to one another provides for developing a fluid dynamic advantage for film cooling performance. Particular groupings or arrangements of inlets can provide for an improved cooling film provided to the hot surface of engine components, or increased efficiency or performance for film cooling. As such, a significant temperature reduction or more to a cooled component can be achieved. Time-on-wing for the engine components effectively increases. Furthermore, the arrangements can be utilized to leverage manufacturing of the engine components with the inlets, such that non-linear or compound inlets are easily manufactured. Thus, an increased flexibility for accommodating internal cooling surface shapes and features are provided.

This written description uses examples to disclose the invention, including the best mode, and also to enable any person skilled in the art to practice the invention, including making and using any devices or systems and performing any incorporated methods. The patentable scope of the invention is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. An engine component for a gas turbine engine, which generates a hot combustion gas flow, and provides a cooling fluid flow, comprising:
   a wall separating the hot combustion gas flow from the cooling fluid flow and having a hot surface along with the hot combustion gas flows in a hot flow path and a cooling surface facing the cooling fluid flow;
   multiple film holes in a pre-determined arrangement along the hot flow path, with each having an inlet provided on the cooling surface, an outlet provided on the hot surface, and a passage connecting the inlet and the outlet; and
   wherein at least two adjacent inlets along the cooling surface have at least one of a different orientation relative to the cooling fluid flow or are non-aligned with each other.
2. The engine component of clause 1, wherein the at least two adjacent inlets have both different orientations and are non-aligned with each other.
3. The engine component of clause 1 or 2, wherein each of the two adjacent inlets along the cooling surface have different orientations relative to the cooling fluid flow and are non-aligned with each other.
4. The engine component of any preceding clause, wherein the at least two adjacent inlets define a pair of adjacent inlets, and the multiple film holes are arranged in multiple pairs along the cooling surface, where each pair of inlets have different orientations relative to the cooling fluid flow and are non-aligned with each other.
5. The engine component of any preceding clause, wherein each inlet of the two adjacent inlets have the same shape.
6. The engine component of any preceding clause, wherein each inlet of the two adjacent inlets has a major axis, which are oriented at different angles relative to the cooling fluid flow.
7. The engine component of clause 6, wherein the different angles differ from each other by greater than 0 degrees and less than 180 degrees.
8. The engine component of any preceding clause, where more than two adjacent inlets have at least one of a different orientation relative to the cooling fluid flow or are non-aligned with each other.
9. The engine component of any preceding clause, wherein cooling surface defines a channel and the at least two adjacent inlets are located within the channel.
10. The engine component of clause 9, further comprising at least one turbulator located within the channel.
11. The engine component of clause 10, wherein the at least one turbulator is located between the at least two inlets.
12. The engine component of any preceding clause, where the at least two adjacent inlets comprise multiple inlets, spaced in a direction of the cooling fluid flow.
13. The engine component of clause 12, wherein a spacing between the multiple inlets is variable.
14. The engine component of any preceding clause, wherein the engine component comprises any one of a vane, blade, shroud, combustor deflector, and combustor liner.
15. The engine component of clause 14, wherein the engine component is one of a vane or blade with at least one of the following internal cooling passages: smooth, turbulated, pinbank, mesh, leading edge, trailing edge, tip, endwall, or micro-circuit; and the at least two adjacent inlets are located on the cooling surface.
16. The engine component of any preceding clause, wherein each film hole inlet defines a major axis across the greatest cross-sectional length of the inlet.
17. The engine component of clause 16, wherein the at least two adjacent inlets along the cooling surface have at least one of a different orientation relative to their major axes or are non-aligned with each other relative to their major axes.
18. The engine component of clause 17, wherein the inlets are aligned with each other and each inlet rotating between 4 to 10 degrees relative an adjacent inlet based upon the major axes of the inlets.
19. An engine component for a gas turbine engine, which generates a hot combustion gas flow, and provides a cooling fluid flow, comprising a wall separating the hot combustion gas flow from the cooling fluid flow and having a hot surface along with the hot combustion gas flows in a hot flow path and a cooling surface facing the cooling fluid flow, with at least two adjacent film hole inlets arranged along the cooling surface and having at least one of different orientations relative to the cooling fluid flow or are non-aligned with each other.
20. The engine component of clause 19, wherein the at least two adjacent inlets have both different orientations and are non-aligned with each other.
21. The engine component of clause 19 or 20, wherein the engine component can comprise any one of a vane, blade, shroud, combustor deflector, and combustor liner.
22. The engine component of clause 21, wherein the engine component is one of a vane or blade with at least one of the following internal cooling passages: smooth, turbulated, pinbank, mesh, leading edge, trailing edge, tip, endwall, or micro-circuit; and the at least two adjacent inlets are located on the cooling surface.
23. The engine component of any of clauses 19 to 22, wherein each film hole inlet defines a major axis across the greatest cross-sectional length of the inlet.
24. The engine component of clause 23, wherein the at least two adjacent inlets along the cooling surface have at least one of a different orientation relative to their major axes or are non-aligned with each other relative to their major axes.

## Claims

1. An engine component (120) for a gas turbine engine (10), which generates a hot combustion gas flow (H), and provides a cooling fluid flow (C), comprising:
a wall (122) separating the hot combustion gas flow (H) from the cooling fluid flow (C) and having a hot surface (126) along with the hot combustion gas flows (H) in a hot flow path and a cooling surface (124) facing the cooling fluid flow (C);
multiple film holes (130) in a pre-determined arrangement along the hot flow path, with each having an inlet (132) provided on the cooling surface (124), an outlet (134) provided on the hot surface (126), and a passage (136) connecting the inlet (132) and the outlet (134); and
wherein at least two adjacent inlets (132) along the cooling surface (124) have at least one of a different orientation relative to the cooling fluid flow (C) or are non-aligned with each other.

2. The engine component (120) of claim 1, wherein the at least two adjacent inlets (132) have both different orientations and are non-aligned with each other.

3. The engine component (120) of claim 1 or 2, wherein the at least two adjacent inlets (132) define a pair of adjacent inlets (132), and the multiple film holes (130) are arranged in multiple pairs along the cooling surface (124), where each pair of inlets (132) have different orientations relative to the cooling fluid flow and are non-aligned with each other.

4. The engine component (120) of any preceding claim, wherein each inlet (132) of the two adjacent inlets (132) has a major axis (150), which are oriented at different angles relative to the cooling fluid flow.

5. The engine component (120) of claim 4 wherein the different angles differ from each other by greater than 0 degrees and less than 180 degrees.

6. The engine component (120) of any preceding claim, where more than two adjacent inlets (132) have at least one of a different orientation relative to the cooling fluid flow or are non-aligned with each other.

7. The engine component (120) of any preceding claim, where the at least two adjacent inlets (132) comprise multiple inlets (132), spaced in a direction of the cooling fluid flow (C).

8. The engine component (120) of any preceding claim, wherein each film hole inlet defines a major axis (150) across the greatest cross-sectional length of the inlet (132).

9. The engine component (120) of claim 8, wherein the at least two adjacent inlets (132) along the cooling surface (124) have at least one of a different orientation relative to their major axes (150) or are non-aligned with each other relative to their major axes (150).

10. The engine component (120) of claim 8 or 9, wherein the inlets (132) are aligned with each other and each inlet (132) rotating between 4 to 10 degrees relative an adjacent inlet (132) based upon the major axes (150) of the inlets (132).

11. An engine component (120) for a gas turbine engine (10), which generates a hot combustion gas flow (H), and provides a cooling fluid flow (C), comprising a wall (122) separating the hot combustion gas flow (H) from the cooling fluid flow (C) and having a hot surface (126) along with the hot combustion gas flows (H) in a hot flow path and a cooling surface (124) facing the cooling fluid flow (C), with at least two adjacent film hole inlets (132) arranged along the cooling surface (124) and having at least one of different orientations relative to the cooling fluid flow (C) or are non-aligned with each other.

12. The engine component (120) of claim 11, wherein the at least two adjacent inlets (132) have both different orientations and are non-aligned with each other.

13. The engine component (120) of claim 11 or 12, wherein the engine component (120) can comprise any one of a vane, blade, shroud, combustor deflector, and combustor liner.

14. The engine component (120) of claim 13, wherein the engine component (120) is one of a vane or blade with at least one of the following internal cooling passages:
smooth, turbulated, pinbank, mesh, leading edge, trailing edge, tip, endwall, or micro-circuit; and the at least two adjacent inlets (132) are located on the cooling surface (124).

15. The engine component (120) of any of claims 11 to 14, wherein each film hole inlet defines a major axis (150) across the greatest cross-sectional length of the inlet (132).
